# EUROPEAN PATENT APPLICATION

(11) **EP 4 813 493 A1**
(43) Date of publication of application: **30.09.2026**
(21) Application number: 24915671.2
(22) Date of filing: 21.11.2024
(51) Int. Cl.: B01D 9/02

(54) **CRYSTALLIZATION SYSTEM AND CRYSTALLIZATION METHOD**

(30) Priority: 05.01.2024 JP 2024000638
(71) Applicant: Mitsubishi Heavy Industries, Ltd., Chiyoda-ku Tokyo 100-8332 (JP)
(72) Inventor: MATSUBARA, Wataru, Tokyo 100-8332 (JP); MIYATA, Yasuyuki, Tokyo 100-8332 (JP); GENTA, Minoru, Tokyo 100-8332 (JP); ITO, Motofumi, Tokyo 100-8332 (JP)
(74) Representative: Studio Torta S.p.A.
(86) International application number: PCT/JP2024/041256
(87) International publication number: WO 2025/146748

(57) **Abstract**

An object to be separated is appropriately crystallized. A crystallization system includes: an adjustment section that reduces a pressure of a dissolution liquid in which an object to be separated has been dissolved; a crystallization vessel in which an opening portion connected to the adjustment section is formed, a dissolution liquid reduced in pressure by the adjustment section is introduced through the opening portion, and the object to be separated is crystallized from the dissolution liquid inside; and a stirring section that is provided in the crystallization vessel and stirs the inside of the crystallization vessel to generate a downward flow of the dissolution liquid, in which a stirring blade of the stirring section that stirs the dissolution liquid is located vertically below the opening portion.

## Description

### Field

The present disclosure relates to a crystallization system and a crystallization method. Background

For example, in order to recycle polyester, a crystallization operation may be performed. Patent Literature 1 describes that, in a crystallization vessel to which a pressure reducing valve is connected, the pressure reducing valve is directly connected to the crystallization vessel.

### Citation List

### Patent Literature

Patent Literature 1: JP H08-89706 A

### Summary

### Technical Problem

In the technique of Patent Literature 1, crystals precipitated by crystallization may be deposited at an outlet of the pressure reducing valve, and the pressure reducing valve may be blocked, potentially preventing appropriate crystallization of an object to be separated.

The present disclosure solves the above-described problems, and an object thereof is to provide a crystallization system and a crystallization method capable of appropriately crystallizing an object to be separated.

### Solution to Problem

To solve the above-described problems and achieve the above object, a crystallization system according to the present disclosure includes: an adjustment section that reduces a pressure of a dissolution liquid in which an object to be separated has been dissolved; a crystallization vessel in which an opening portion connected to the adjustment section is formed, a dissolution liquid reduced in pressure by the adjustment section is introduced through the opening portion, and the object to be separated is crystallized from the dissolution liquid inside; and a stirring section that is provided in the crystallization vessel and stirs the inside of the crystallization vessel to generate a downward flow of the dissolution liquid. A stirring blade of the stirring section that stirs the dissolution liquid is located vertically below the opening portion.

To solve the above-described problems and achieve the above object, a crystallization method according to the present disclosure is of a crystallization system that includes an adjustment section that reduces a pressure of a liquid, a crystallization vessel in which an opening portion connected to the adjustment section is formed, and a stirring section that is provided in the crystallization vessel and in which a stirring blade that stirs the liquid is located vertically below the opening portion. The crystallization method includes the steps of: supplying a dissolution liquid in which an object to be separated has been dissolved to the adjustment section, thereby reducing a pressure of the dissolution liquid by the adjustment section and introducing the dissolution liquid through the opening portion into the crystallization vessel, and crystallizing the object to be separated from the dissolution liquid in the crystallization vessel; and rotating the stirring section in a state where the dissolution liquid reduced in pressure is introduced into the crystallization vessel, thereby stirring the inside of the crystallization vessel to generate a downward flow of the dissolution liquid. Advantageous Effects of Invention

According to the present disclosure, an object to be separated can be appropriately crystallized.

### Brief Description of Drawings

FIG. 1 is a schematic diagram of a polyester recycling process in the present embodiment.
FIG. 2 is a schematic diagram of a separation system according to a first embodiment.
FIG. 3 is a schematic side view of a crystallization system.
FIG. 4 is a schematic top view of the crystallization system.
FIG. 5 is a schematic top view illustrating an internal structure of a crystallization section.
FIG. 6 is a schematic top view of the crystallization section illustrating an arrangement in a case where the number of baffles is different.

### Description of Embodiments

Hereinafter, a preferred embodiment of the present invention will be described in detail with reference to the accompanying drawings. Note that the present invention is not limited by the embodiment, and in a case where there are multiple embodiments, the present invention includes a combination of the embodiments.

### (First embodiment)

### (Recycling process)

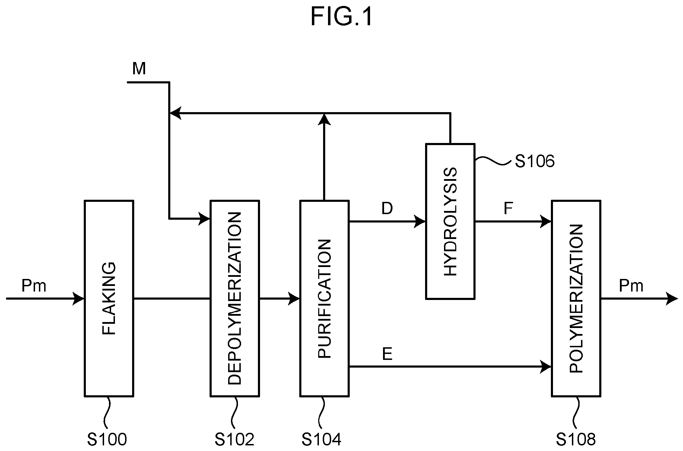

FIG. 1 is a schematic diagram of a polyester recycling process in the present embodiment. In the present embodiment, a process of recycling (regenerating) a polyester raw material Pm is performed by depolymerizing the polyester raw material Pm to form a monomer and polymerizing the monomer again. Specifically, as illustrated in FIG. 1, the polyester raw material Pm is flaked (step S100), a dissolution liquid is mixed with a reaction solvent M to depolymerize the flaked material (step S102), a monomer of the depolymerized polyester is purified (separated) to produce a monomer D derived from a carboxylic acid and a monomer E of an alcohol component (step S104), the monomer D is hydrolyzed to separate the reaction solvent M (step S106), and a monomer F produced by hydrolysis of the monomer D and the monomer E are polymerized (step S108) to regenerate the polyester raw material Pm. Note that, in the recycling process in which a separation system 1 of the present embodiment is adopted, flaking in step S100 may be omitted, or only processing of recovering the monomers D and E illustrated in step S104 and the monomer F illustrated in step S106 may be performed without performing up to processing of repolymerization as in step S108.

### (Polyester raw material)

The polyester raw material Pm to be depolymerized in the present embodiment is a substance containing polyester. The polyester raw material Pm is not particularly limited, and examples thereof include waste products such as polyethylene terephthalate (PET), polyethylene butylene terephthalate (PEBT), polybutylene terephthalate (PBT), polycyclohexane dimethyl terephthalate (PCT), polyethylene naphthalate (PEN), polybutylene naphthalate (PBN), and polycarbonate (PC). The polyester raw material Pm is not limited to those containing only a polyester component, but also contains components other than the polyester component. Examples of components other than polyester contained in the polyester raw material Pm include plastics such as polyethylene, polystyrene, polypropylene, and polyvinyl chloride other than polyester, metals, dyes, pigments, and polymerization catalysts. Clothing in which polyester and other components are woven into a fibrous form is also exemplified as the polyester raw material Pm. Hereinafter, components other than polyester contained in the polyester raw material Pm are referred to as impurities.

### (Reaction solvent)

The reaction solvent M is a solvent that reacts with polyester to depolymerize the polyester. The reaction solvent M may be, for example, at least one of methanol, ethanol, water, and ethylene glycol.

### (Monomer derived from carboxylic acid)

The monomer D derived from a carboxylic acid is a monomer having a carboxyl group, produced by a depolymerization reaction of polyester. The monomer D may be, for example, dimethyl carboxylate or diethyl carboxylate. More specifically, the monomer D is preferably a monomer of terephthalic acid, and may be, for example, dimethyl terephthalate (DMT).

### (Monomer of alcohol component)

The monomer E of an alcohol component is a monomer of an alcohol component, produced by the depolymerization reaction of polyester. The monomer E may be, for example, a dihydroxy compound (dihydric alcohol), and more specifically, may be ethylene glycol (EG).

Hereinafter, a case where the polyester is PET, the reaction solvent M is methanol, the monomer D is DMT, and the monomer E is EG will be described as an example.

### (Separation system)

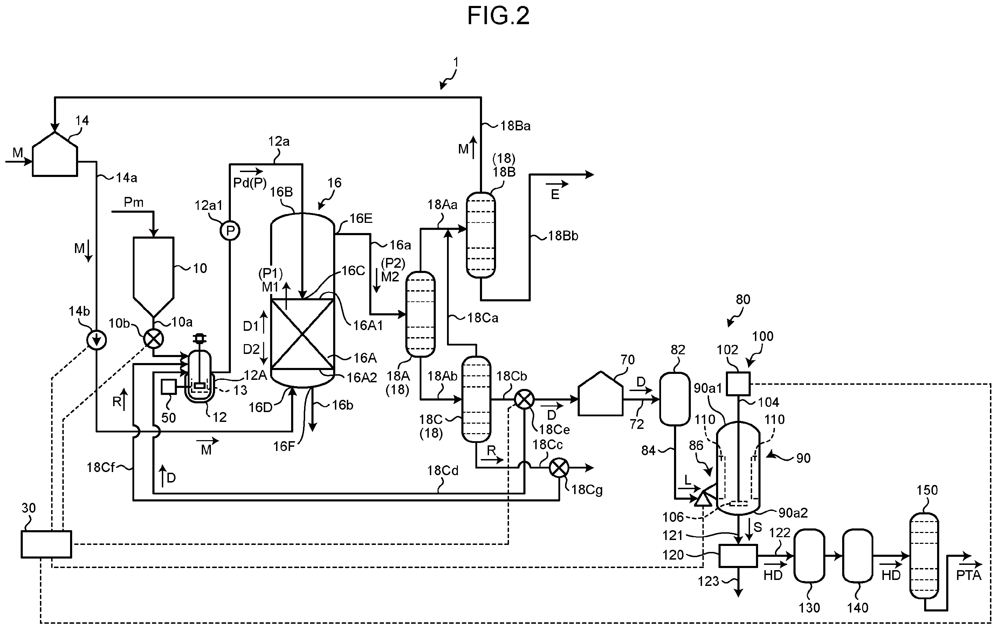

FIG. 2 is a schematic diagram of a separation system according to the first embodiment. The separation system 1 according to the first embodiment is a system that monomerizes polyester contained in the polyester raw material Pm to produce monomers D and E. As illustrated in FIG. 2, the separation system 1 includes a raw material storage section 10, a dissolution section 12, a solid-liquid separation section 13, a solvent storage section 14, a reaction section 16, a separation section 18, a control section 30, a temporary storage section 70, and a crystallization system 80.

Hereinafter, a Z direction is a vertical direction (an up-down direction). An upward direction in the vertical direction of the Z direction is defined as a Z1 direction, and a downward direction in the vertical direction is defined as a Z2 direction.

### (Raw material storage section)

The raw material storage section 10 is a vessel into which the polyester raw material Pm is introduced and in which the polyester raw material Pm is stored. In the present embodiment, the flaked polyester raw material Pm is stored in the raw material storage section 10, but a shape and size of the polyester raw material Pm may be arbitrary. The raw material storage section 10 is connected to the dissolution section 12 via an introduction pipe 10a. The polyester raw material Pm in the raw material storage section 10 is supplied to the dissolution section 12 through the introduction pipe 10a. The introduction pipe 10a is provided with an adjustment section 10b that adjusts an amount of the polyester raw material Pm supplied from the raw material storage section 10 to the dissolution section 12. The adjustment section 10b is, for example, an on-off valve, and causes the polyester raw material Pm in the raw material storage section 10 to be supplied to the dissolution section 12 in an open state, and stops the supply of the polyester raw material Pm in the raw material storage section 10 to the dissolution section 12 in a closed state. However, the adjustment section 10b is not limited to the on-off valve, and may be any mechanism capable of adjusting the supply of the polyester raw material Pm to the dissolution section 12. Further, the polyester raw material Pm may be directly supplied to the dissolution section 12 without passing through the raw material storage section 10, the introduction pipe 10a, and the adjustment section 10b.

### (Dissolution section)

The dissolution section 12 is a vessel in which a dissolution liquid Pd is stored. The dissolution liquid Pd is a solution produced by mixing the polyester raw material Pm and the monomer D. Here, the polyester component contained in the polyester raw material Pm is dissolved in the monomer D, but impurities, which are components other than the polyester contained in the polyester raw material Pm, remain without being dissolved in the monomer D. Therefore, it can be said that the dissolution liquid Pd contains a polyester solution P, in which the polyester contained in the polyester raw material Pm is dissolved in the monomer D, and the impurities contained in the polyester raw material Pm.

The monomer D and the polyester raw material Pm are supplied to the dissolution section 12. In the dissolution section 12, while the polyester contained in the polyester raw material Pm is dissolved in the monomer D, the impurities remain without being dissolved in the monomer D, and thus a dissolution liquid Pd containing the polyester solution P and the impurities is produced. By dissolving the polyester in the monomer D in this manner, a viscosity can be reduced and fluidity can be improved, allowing the polyester to be easily discharged to the reaction section 16. Note that, the polyester solution P is not limited to a state where an entire amount of the polyester is dissolved in the monomer D, and at least a part of the polyester may remain undissolved in the monomer D. Further, in a case where there is a component that is dissolvable in the monomer D, among components other than the polyester contained in the polyester raw material Pm, the polyester solution P may also contain the component dissolved in the monomer D.

The dissolution section 12 is connected to a first reaction section 16A to be described later via an introduction pipe 12a. The dissolution liquid Pd in the dissolution section 12 passes through the introduction pipe 12a and is supplied to the first reaction section 16A. Further, the introduction pipe 12a is provided with a supply section 12a1. The supply section 12a1 is a mechanism for supplying the polyester solution P in the dissolution section 12 to the first reaction section 16A, and is a pump in the present embodiment.

In the present embodiment, the dissolution section 12 is provided with a heating section 12A. The heating section 12A heats the monomer D and the polyester raw material Pm supplied to the dissolution section 12 to a predetermined temperature by heating the inside of the dissolution section 12. The predetermined temperature is a temperature at which the polyester can be dissolved in the monomer D. By heating at a predetermined temperature in this manner, the polyester contained in the polyester raw material Pm can be appropriately dissolved in the monomer D. The predetermined temperature is preferably 140°C or higher and 300°C or lower, more preferably 160°C or higher and 280°C or lower, and still more preferably 190°C or higher and 250°C or lower. Note that, the impurities also contain a component that melts when being heated to a predetermined temperature (a temperature at which the polyester can be dissolved in the monomer D). Therefore, in a case where the impurities contain a component that melts when being heated to the predetermined temperature, the impurities are contained in the dissolution liquid Pd in a partially molten state. In the present embodiment, the heating section 12A is provided in the dissolution section 12, but a position where the heating section 12A is provided is not limited thereto and may be any position.

### (Solvent storage section)

The solvent storage section 14 is a vessel into which the reaction solvent M is introduced and in which the reaction solvent M is stored. The solvent storage section 14 is connected to the reaction section 16 via an introduction pipe 14a. The reaction solvent M in the solvent storage section 14 is supplied to the reaction section 16 through the introduction pipe 14a. More specifically, the introduction pipe 14a is provided with a heating and pressurizing section 14b that pressurizes and heats the reaction solvent M. The heating and pressurizing section 14b pressurizes and heats the reaction solvent M to bring the reaction solvent M into a supercritical state or a subcritical state (pressurized gas or pressurized liquid). The reaction solvent M in a supercritical state or a subcritical state (pressurized gas or pressurized liquid) is supplied to the reaction section 16.

### (Reaction section)

The reaction section 16 is a container into which the dissolution liquid Pd and the reaction solvent M are introduced and in which the polyester in the dissolution liquid Pd is depolymerized. The reaction section 16 includes a first reaction section 16A and a second reaction section 16B.

### (First reaction section)

The first reaction section 16A is formed in the reaction section 16. In the present embodiment, the first reaction section 16A can be said to be a portion filled with a filling material in the reaction section 16. In the first reaction section 16A, a known filling material used in a gas-liquid or liquid-liquid contact device can be used as the filling material, and for example, a filling material similar to the filling material used in a contact device for bringing heavy oil into contact with water to extract an active component can be used. Specific examples of the filling material include a pipe made of SUS or the like, a Raschig ring, a Berl saddle, a Tellerette, and a ball.

The introduction pipe 12a is connected to the first reaction section 16A. More specifically, an introduction port 16C, which is an opening of the introduction pipe 12a through which the dissolution liquid Pd from the dissolution section 12 is introduced, is connected to the first reaction section 16A. The introduction port 16C is connected to a surface 16A1 of the first reaction section 16A on a side of a first direction D1. The introduction pipe 12a is connected to the surface 16A1 such that the introduction port 16C opens toward a second direction D2 opposite to the first direction D1. As described above, in the present embodiment, the introduction port 16C that opens toward the second direction D2 is connected to the surface 16A1 of the first reaction section 16A, but the present invention is not limited thereto. For example, the introduction port 16C does not necessarily have to be directly connected to the first reaction section 16A, and the introduction port 16C that opens toward the second direction D2 may be connected on the side of the first direction D1 relative to the surface 16A1 of the first reaction section 16A in the reaction section 16.

The introduction pipe 14a is connected to the reaction section 16. More specifically, an introduction port 16D, which is an opening of the introduction pipe 14a through which the reaction solvent M from the solvent storage section 14 is introduced, is connected to the reaction section 16. The introduction port 16D is connected on the side of the second direction D2 relative to a surface 16A2 of the first reaction section 16A on the side of the second direction D2. The introduction pipe 14a is connected on the side of the second direction D2 relative to the surface 16A2 such that the introduction port 16D opens toward the first direction D1 or toward the center from a side surface. As described above, in the present embodiment, the introduction port 16D, which opens toward the first direction D1 or toward the center from the side surface, is connected on the side of the second direction D2 relative to the surface 16A2 of the first reaction section 16A, but the present invention is not limited thereto. For example, the introduction port 16D may be directly connected to the first reaction section 16A or may be connected to the surface 16A2 of the first reaction section 16A.

As described above, in the present embodiment, the introduction port 16C into which the dissolution liquid Pd is introduced opens toward the second direction D2, and the introduction port 16D into which the reaction solvent M is introduced opens toward the first direction D1 or toward the center from the side surface. Therefore, the dissolution liquid Pd and the reaction solvent M are introduced into the first reaction section 16A in directions facing each other.

The dissolution liquid Pd introduced from the introduction port 16C into the first reaction section 16A moves on the surface of the filling material of the first reaction section 16A toward the second direction D2. On the other hand, the reaction solvent M in a supercritical state or a subcritical state (pressurized gas or pressurized liquid) introduced from the introduction port 16D moves in the first reaction section 16A toward the first direction D1. In the first reaction section 16A, the reaction solvent M in a supercritical state or a subcritical state (pressurized gas or pressurized liquid) comes into contact with the dissolution liquid Pd. The polyester in the dissolution liquid Pd is depolymerized (reduced in molecular weight) by the reaction solvent M, and the depolymerized polyester is extracted into the reaction solvent M in a supercritical state or a subcritical state (pressurized gas or pressurized liquid). Hereinafter, the polyester depolymerized in the first reaction section 16A is referred to as a first depolymerized polyester P1, and a mixture of the first depolymerized polyester P1 and the reaction solvent M (the reaction solvent M into which the first depolymerized polyester P1 is extracted) is referred to as a first solvent M1. The first solvent M1 containing the first depolymerized polyester P1 travels through the first reaction section 16A to the side of the first direction D1, and is discharged to the side of the first direction D1 of the first reaction section 16A.

Note that, the first depolymerized polyester P1 includes the monomers D and E produced by depolymerizing the polyester in the dissolution liquid Pd, a monomer D originally mixed in the dissolution liquid Pd, and an oligomer produced by depolymerizing the polyester. The oligomer here can be said to be an oligomer derived from a carboxylic acid or an oligomer of an alcohol component (an oligomer derived from a carboxylic acid or an oligomer of an alcohol component having a molecular weight smaller than that of polyester) that has not been monomerized but has been depolymerized from polyester. Further, the oligomer contained in a residual substance R in the polyester solution P is also depolymerized by the reaction solvent M. Therefore, the first depolymerized polyester P1 also contains the depolymerized residual substance R. The depolymerized residual substance R is, for example, an oligomer that is contained in the residual substance and has been depolymerized or monomers D and E produced by depolymerizing the oligomer contained in the residual substance, or the like.

### (Second reaction section)

The second reaction section 16B is formed in the reaction section 16, and the second reaction section 16B is formed at a portion where the first solvent M1 is discharged from the first reaction section 16A. In the present embodiment, since the first solvent M1 is discharged to the side of the first direction D1, the second reaction section 16B can be said to be a space formed on the side of the first direction D1 of the first reaction section 16A.

In the second reaction section 16B, the first depolymerized polyester P1 contained in the first solvent M1 is further depolymerized (reduced in molecular weight) by the reaction solvent M contained in the first solvent M1. Hereinafter, the first depolymerized polyester P1 further depolymerized in the second reaction section 16B is referred to as a second depolymerized polyester P2, and a mixture of the second depolymerized polyester P2 and the reaction solvent M (the reaction solvent M in which the second depolymerized polyester P2 is dissolved) is referred to as a second solvent M2. A discharge pipe 16a is connected to the second reaction section 16B. More specifically, a discharge port 16E, which is an opening of the discharge pipe 16a through which the second solvent M2 is discharged from the second reaction section 16B, is connected to the second reaction section 16B. The second solvent M2 containing the second depolymerized polyester P2 in the second reaction section 16B is discharged from the discharge port 16E through the discharge pipe 16a to the outside of the second reaction section 16B.

Note that, the second depolymerized polyester P2 contains the monomers D and E in the first depolymerized polyester P1, monomers D and E produced by depolymerizing the oligomer in the first depolymerized polyester P1, and an oligomer produced by depolymerizing the first depolymerized polyester P1.

A discharge pipe 16b is connected to the bottom of the reaction section 16. More specifically, a discharge port 16F, which is an opening of the discharge pipe 16b through which non-extracted matter (described later) in the reaction section 16 is discharged, is connected to the bottom of the reaction section 16. From the discharge port 16F, non-extracted matter is discharged, including impurities such as metal compounds that have not been extracted into the reaction solvent M, residues of undecomposed polyester that have not been extracted into the reaction solvent M, and the like. In other words, the non-extracted matter at the bottom of the reaction section 16 is discharged from the discharge port 16F through the discharge pipe 16b to the outside of the reaction section 16. The non-extracted matter discharged from the discharge port 16F can be said to be a component of the polyester solution P that remains in the first reaction section 16A and the second reaction section 16B without being discharged to the separation section 18 as the second solvent M2 (the reaction solvent M in which the second depolymerized polyester P2 is dissolved).

Further, the reaction section 16 may be provided with a heating section that heats the inside of the reaction section 16 and a pressurizing section that maintains a pressure inside the reaction section 16 at a predetermined value or more. The temperature inside the reaction section 16 is preferably 250°C or higher and 400°C or lower, and more preferably 250°C or higher and 350°C or lower. Further, the pressure inside the reaction section 16 is preferably 1 MPa or more and 30 MPa or less, and more preferably 6 MPa or more and 25 MPa or less. The pressurizing section and the heating section may be controlled by the control section 30.

### (Separation section)

In the separation section 18, the second solvent M2 containing the second depolymerized polyester P2 is introduced, and the second solvent M2 is separated into the reaction solvent M, the monomer D derived from a carboxylic acid contained in the second depolymerized polyester P2, the monomer E of an alcohol component contained in the second depolymerized polyester P2, and the residual substance R. The separation section 18 separates the second solvent M2 into the monomer D, the monomer E, and the residual substance R by distillation. The residual substance R is a component of the second solvent M2 other than the reaction solvent M, the monomer D, and the monomer E, and contains an oligomer.

In the present embodiment, the separation section 18 includes a first separation section 18A, a second separation section 18B, and a third separation section 18C.

The first separation section 18A is a separation column connected to the discharge pipe 16a. The second solvent M2 containing the second depolymerized polyester P2 is introduced into the first separation section 18A through the discharge pipe 16a. The first separation section 18A separates the second solvent M2 into a low-boiling component and a high-boiling component having a boiling point higher than that of the low-boiling component. For example, in the first separation section 18A, the second solvent M2 may be set to a predetermined temperature, a component that has turned into a gas may be taken as a low-boiling component, and a liquid component may be taken as a high-boiling component. Discharge pipes 18Aa and 18Ab are connected to the first separation section 18A. The low-boiling component is discharged from the discharge pipe 18Aa, and the high-boiling component is discharged from the discharge pipe 18Ab.

The second separation section 18B is a separation column connected to the first separation section 18A via the discharge pipe 18Aa. The low-boiling component is introduced into the second separation section 18B through the discharge pipe 18Aa. The second separation section 18B separates the low-boiling component into the reaction solvent M and the monomer E. Discharge pipes 18Ba and 18Bb are connected to the second separation section 18B. The reaction solvent M is discharged from the discharge pipe 18Ba, and the monomer E is discharged from the discharge pipe 18Bb. Note that the discharge pipe 18Ba is connected to the second separation section 18B and the solvent storage section 14. Therefore, the reaction solvent M discharged from the second separation section 18B is returned to the solvent storage section 14 and reused for depolymerization of polyester.

The third separation section 18C is a separation column connected to the first separation section 18A via the discharge pipe 18Ab. The high-boiling component is introduced into the third separation section 18C through the discharge pipe 18Ab. The third separation section 18C separates the high-boiling component into a further higher-boiling residual substance R, a low-boiling component containing the reaction solvent M and the monomer E, and the monomer D. Discharge pipes 18Ca, 18Cb, and 18Cc are connected to the third separation section 18C. The discharge pipe 18Ca is connected to the second separation section 18B. The low-boiling component separated in the third separation section 18C is discharged to the second separation section 18B through the discharge pipe 18Ca. Further, the monomer D separated in the third separation section 18C is discharged from the discharge pipe 18Cb and introduced into the temporary storage section 70. The residual substance R separated in the third separation section 18C is discharged from the discharge pipe 18Cc.

An introduction pipe 18Cd is connected to the third separation section 18C. The introduction pipe 18Cd is also connected to the dissolution section 12, and introduces the monomer D discharged from the third separation section 18C into the dissolution section 12. In the example of FIG. 2, the introduction pipe 18Cd branches off from the discharge pipe 18Cb. The introduction pipe 18Cd is provided with an adjustment section 18Ce that adjusts the amount of the monomer D supplied from the third separation section 18C to the dissolution section 12. The adjustment section 18Ce is, for example, an on-off valve, and causes the monomer D to be supplied to the dissolution section 12 in the open state, and stops the supply of the monomer D to the dissolution section 12 in the closed state. However, the adjustment section 18Ce is not limited to the on-off valve, and may be any mechanism capable of adjusting the supply of the monomer D to the dissolution section 12. Note that, in the present embodiment, the adjustment section 18Ce is provided at a branching portion of the introduction pipe 18Cd from the discharge pipe 18Cb, but the position where the adjustment section 18Ce is provided is not limited thereto and may be arbitrary. Further, the introduction pipe 18Cd does not necessarily have to be connected to the discharge pipe 18Cb, and may be directly connected to the third separation section 18C. Also, for example, a storage section (vessel) for storing the monomer D may be provided in the discharge pipe 18Cb, and the introduction pipe 18Cd may be connected to the storage section.

An introduction pipe 18Cf is connected to the third separation section 18C. The introduction pipe 18Cf is also connected to the dissolution section 12, and introduces the residual substance R discharged from the third separation section 18C into the dissolution section 12. In the example of FIG. 2, the introduction pipe 18Cf branches off from the discharge pipe 18Cc. The introduction pipe 18Cf is provided with an adjustment section 18Cg that adjusts the amount of the residual substance R supplied from the third separation section 18C to the dissolution section 12. The adjustment section 18Cg is, for example, an on-off valve, and causes the residual substance R to be supplied to the dissolution section 12 in the open state, and stops the supply of the residual substance R to the dissolution section 12 in the closed state. However, the adjustment section 18Cg is not limited to the on-off valve, and may be any mechanism capable of adjusting the supply of the residual substance R to the dissolution section 12. Note that, in the present embodiment, the adjustment section 18Cg is provided at the branching portion of the introduction pipe 18Cf from the discharge pipe 18Cc, but the position where the adjustment section 18Cg is provided is not limited thereto and may be arbitrary. Further, the introduction pipe 18Cf does not necessarily have to be connected to the discharge pipe 18Cc, and may be directly connected to the third separation section 18C.

Note that, for example, a storage section (vessel) for storing the residual substance R may be provided in the discharge pipe 18Cc, and the introduction pipe 18Cf may be connected to the storage section. Further, the introduction pipe 18Cf may be provided with a filter that collects foreign matter in the residual substance R while allowing an oligomer in the residual substance R to pass through.

### (Temporary storage section)

The temporary storage section 70 is, for example, a tank, and temporarily stores the monomer D supplied from the third separation section 18C. The temporary storage section 70 is connected to the third separation section 18C via the discharge pipe 18Cb. The temporary storage section 70 is connected to a dissolution vessel 82 via a discharge pipe 72. The temporary storage section 70 supplies the temporarily stored monomer D to the dissolution vessel 82 of the crystallization system 80.

### (Crystallization system)

The crystallization system 80 is a system for crystallizing the monomer D from the solution in which the monomer D separated by the separation section 18 is dissolved. The monomer D separated by the separation section 18 may contain impurities, and the crystallization system 80 crystallizes a high-purity monomer D obtained by removing the impurities from the solution in which the monomer D is dissolved. Examples of the impurities here include an isomer of the monomer D that could not be completely separated by distillation in the third separation section 18C. For example, in a case where the monomer D is DMT, the isomer of DMT is DMI (dimethyl isophthalate) derived from IPA (isophthalic acid) which is copolymer component. DMI has a boiling point close to that of DMT, and it is difficult to separate DMI even when DMI is distilled, but DMI can be separated by crystallization. In other words, in the present embodiment, a high-purity monomer D can be extracted by crystallizing the monomer D (DMT) without crystallizing DMI. Hereinafter, the high-purity monomer D extracted by crystallization is appropriately referred to as a monomer HD.

Furthermore, in the present embodiment, the crystallization system 80 hydrolyzes the crystallized monomer HD to prepare PTA (high-purity terephthalic acid). However, the crystallization system 80 is not limited to performing up to the process of obtaining PTA from the crystallized monomer HD, and may perform only the process of crystallizing the monomer HD.

Further, the crystallization system 80 of the present embodiment is provided in the separation system 1 and used for crystallizing the monomer HD, but the use of the crystallization system 80 is not limited thereto. The crystallization system 80 may be a system that separates, from a solution of an arbitrary component, an object to be separated which is the arbitrary component dissolved in the solution by crystallization.

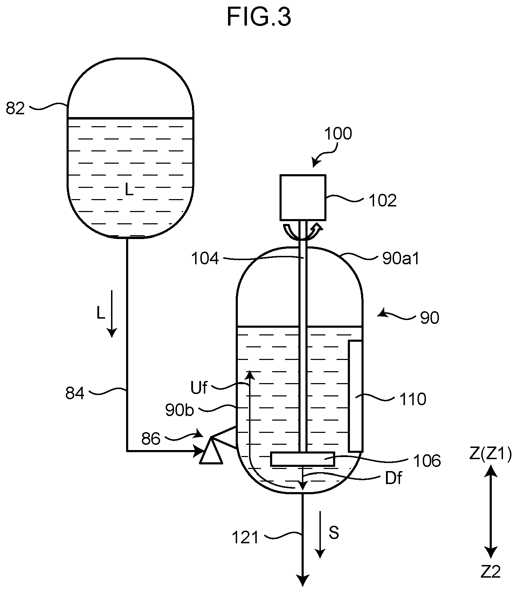

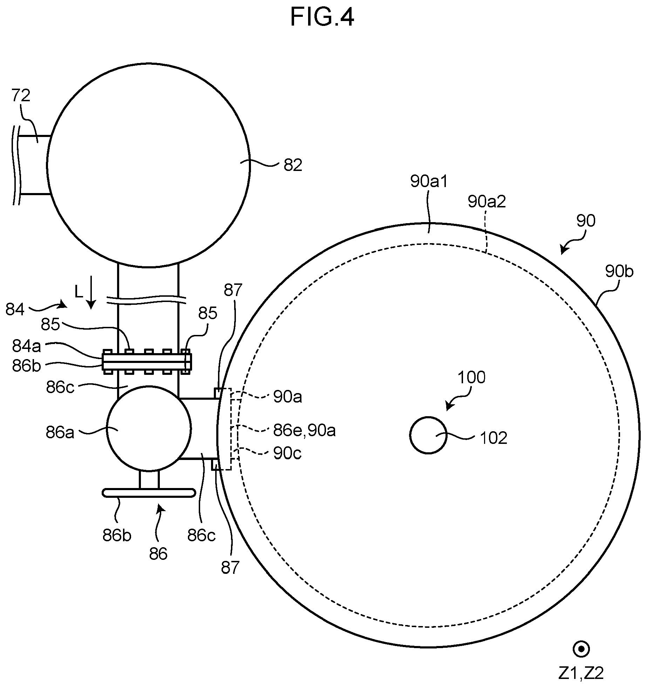

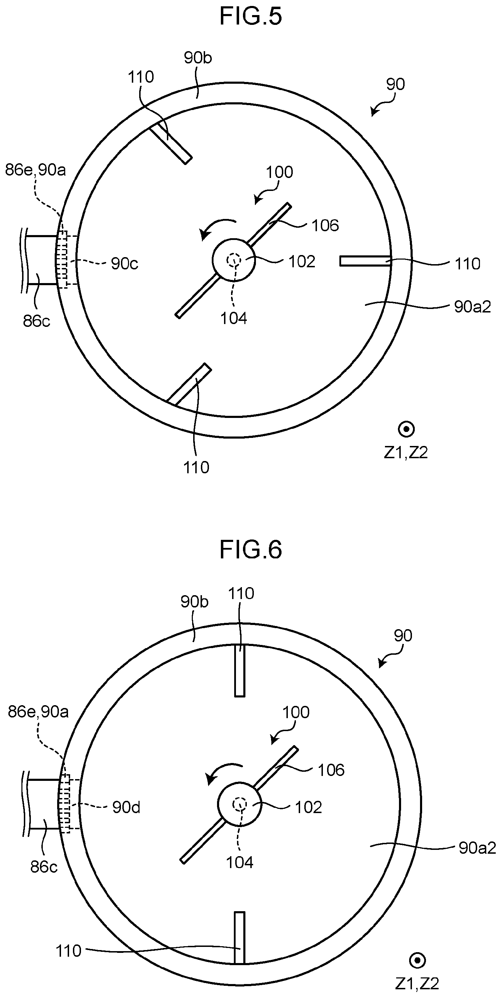

Hereinafter, the crystallization system 80 according to the present embodiment will be specifically described. FIG. 3 is a schematic side view of the crystallization system. FIG. 4 is a schematic top view of the crystallization system. FIG. 5 is a schematic top view illustrating the internal structure of a crystallization section. FIG. 6 is a schematic top view of the crystallization section illustrating an arrangement in a case where the number of baffles is different.

The crystallization system 80 includes a dissolution vessel 82, an adjustment section 86, a crystallization vessel 90, a stirring section 100, a solid-liquid separation section 120, a melting vessel 130, a molten product temporary storage tank 140, and a hydrolysis separation reaction section 150. In the present embodiment, the crystallization system 80 is connected downstream of the discharge pipe 72, and extracts the monomer HD by crystallization from the dissolution liquid in which the monomer D has been dissolved, flowing through the discharge pipe 72.

### (Dissolution vessel)

The dissolution vessel 82 is a tank and stores a dissolution liquid L in which the monomer D has been dissolved. The dissolution vessel 82 is connected to the temporary storage section 70 via the discharge pipe 72. The monomer D containing impurities, which has been separated by the third separation section 18C, is introduced into the dissolution vessel 82 from the temporary storage section 70. Further, a solvent for dissolving the monomer D is introduced into the dissolution vessel 82. As a result, in the dissolution vessel 82, the monomer D is dissolved in the solvent and stored as the dissolution liquid L. Note that any liquid may be used as the solvent, but methanol is used in the present embodiment.

The dissolution vessel 82 is connected to the adjustment section 86 and the crystallization vessel 90 via an introduction pipe 84. The dissolution liquid L stored in the dissolution vessel 82 is introduced into the crystallization vessel 90 through the introduction pipe 84 and the adjustment section 86. Note that the dissolution vessel 82 is located in the Z1 direction (vertically upward) relative to the crystallization vessel 90 to be described later. More specifically, a bottom surface of the dissolution vessel 82 on the side of the Z2 direction is located in the Z1 direction relative to an opening portion 90c formed in the crystallization vessel 90. However, a positional relationship between the dissolution vessel 82 and the crystallization vessel 90 in the Z direction is not limited thereto and may be arbitrary.

### (Introduction pipe)

The introduction pipe 84 is a pipe connecting the dissolution vessel 82 and the crystallization vessel 90. In the present embodiment, as described later, since the introduction pipe 84 is connected to the adjustment section 86 connected to the opening portion 90c of the crystallization vessel 90, it can be said that the introduction pipe is connected to the crystallization vessel 90 (opening portion 90c) via the adjustment section 86. The introduction pipe 84 extends in the Z2 direction from a portion connected to the dissolution vessel 82 to a portion connected to the crystallization vessel 90 (adjustment section 86 in this example). In other words, it can be said that the introduction pipe 84 extends toward the Z2 direction rather than the Z1 direction as it approaches toward the portion connected to the crystallization vessel 90 (adjustment section 86 in this example) in a section from the portion connected to the dissolution vessel 82 to the portion connected to the crystallization vessel 90 (adjustment section 86 in this example). Note that, in the example of FIG. 3, the introduction pipe 84 extends along the Z2 direction, but is not limited thereto, and may extend at an incline to the Z2 direction.

The dissolution liquid L in the dissolution vessel 82 flows into the crystallization vessel 90 through the introduction pipe 84 and the adjustment section 86.

### (Adjustment section)

The adjustment section 86 is a device that reduces the pressure of the dissolution liquid L. The adjustment section 86 is connected to the introduction pipe 84 and the crystallization vessel 90. The adjustment section 86 reduces the pressure of the dissolution liquid L introduced from the dissolution vessel 82 through the introduction pipe 84, and introduces the dissolution liquid L under reduced pressure into the crystallization vessel 90.

The adjustment section 86 is a pressure reducing valve in the present embodiment. The adjustment section 86 may have any structure as long as it is a pressure reducing valve, but is an angle valve in the present embodiment. Since the adjustment section 86 is an angle valve, the pressure can be efficiently reduced. As illustrated in FIG. 4, the adjustment section 86 of the present embodiment includes a valve portion 86a, an adjustment handle 86b, and a pipe portion 86c.

The pipe portion 86c is a tubular member with a flow path formed inside, and one end portion 86d is connected to the introduction pipe 84. In the present embodiment, the end portion 86d has a shape in which a flange is formed around the opening, and an end portion 84a of the introduction pipe 84 on the side connected to the adjustment section 86 also has a shape in which a flange is formed around the opening. In the present embodiment, a plurality of fastening holes (not illustrated) penetrate the flanges of the end portions 86d and 84a, and the end portion 86d and the end portion 84a are connected by being fastened by fastening members 85 inserted into the fastening holes.

Further, the other end portion 86e of the pipe portion 86c is connected to the crystallization vessel 90. In the present embodiment, the end portion 86e has a shape in which a flange is formed around the opening. Further, a recessed portion 90a, and the opening portion 90c, which is formed at a position overlapping with the recessed portion 90a and communicates the inside and the outside of the crystallization vessel 90, are formed on a wall surface of the crystallization vessel 90. In the present embodiment, the pipe portion 86c is directly connected to the crystallization vessel 90 by being fastened by the fastening member 87 in a state where the end portion 86e of the pipe portion 86c is inserted into the recessed portion 90a of the crystallization vessel 90.

Note that, as described above, since the adjustment section 86 in the present embodiment is an angle valve, the flow path on the side of the end portion 86d of the pipe portion 86c and the flow path on the side of the end portion 86e of the pipe portion 86c intersect. In the present embodiment, the flow path on the side of the end portion 86d of the pipe portion 86c and the flow path on the side of the end portion 86e of the pipe portion 86c intersect in a horizontal direction. The horizontal direction is a direction orthogonal to the Z direction (vertical direction).

The valve portion 86a is a valve provided in a flow path inside the pipe portion 86c. The adjustment handle 86b is a mechanism that is attached to the valve portion 86a and adjusts an opening degree of the flow path inside the pipe portion 86c by the valve portion 86a. When the adjustment handle 86b rotates, the adjustment section 86 adjusts opening and closing of the valve in the valve portion 86a to adjust a flow rate of the dissolution liquid L and the pressure of the dissolution liquid L.

The dissolution liquid L introduced into the adjustment section 86 is introduced into the crystallization vessel 90 in a state where the pressure has been reduced by the adjustment section 86. Since the temperature of the dissolution liquid L reduced in pressure decreases, the monomer HD which is an object to be separated is crystallized from the reduced-pressure dissolution liquid L.

Note that, in the present embodiment, the adjustment section 86 is directly connected to the crystallization vessel 90, but the present invention is not limited thereto, and a pipe connecting the adjustment section 86 and the opening portion 90c may be provided between the adjustment section 86 and the opening portion 90c of the crystallization vessel 90.

### (Crystallization vessel)

The crystallization vessel 90 is a vessel into which the dissolution liquid L reduced in pressure by the adjustment section 86 is introduced, and in which an object to be separated (here, the monomer HD) is crystallized from the dissolution liquid L. As described above, the opening portion 90c connected to the adjustment section 86 is formed in the crystallization vessel 90, and the dissolution liquid L reduced in pressure by the adjustment section 86 is introduced through the opening portion 90c. In this manner, the dissolution liquid L reduced in pressure is introduced into the crystallization vessel 90, and the dissolution liquid L is stored under reduced pressure. In other words, the crystallization vessel 90 can be said to be a flash-type crystallization vessel in which an internal pressure is reduced more than an external pressure.

The crystallization vessel 90 is, for example, a tank, and may have any shape, but has an upper surface portion 90a1, a bottom surface portion 90a2, and a side wall 90b in the present embodiment.

The side wall 90b is a wall surface of the crystallization vessel 90, the upper surface portion 90a1 is a member covering the end portion of the side wall 90b on the side of the Z1 direction, and the bottom surface portion 90a2 is a member covering the end portion of the side wall 90b on the side of the Z2 direction. In the present embodiment, the side wall 90b has a cylindrical shape, and the upper surface portion 90a1 and the bottom surface portion 90a2 have hemispherical shapes, but the shapes thereof are not limited thereto and may be arbitrary. In the present embodiment, the recessed portion 90a and the opening portion 90c are formed in the side wall 90b. Further, in the present embodiment, a through hole through which the stirring section 100 to be described later passes is opened in the upper surface portion 90a1. Further, the bottom surface portion 90a2 is connected to a discharge pipe 121 for discharging a slurry S. Note that, the slurry S is a slurry containing the crystallized monomer HD and the dissolution liquid L from which the monomer HD has been removed. However, the position where the recessed portion 90a and the opening portion 90c, the through hole through which the stirring section 100 passes, and the discharge pipe 121 are provided is not limited thereto and may be arbitrary, and for example, the discharge pipe 121 may be provided on the side wall 90b.

A baffle 110 is provided inside the crystallization vessel 90. The baffle 110 is a member that straightens the flow of the dissolution liquid L in the crystallization vessel 90. Although the shape, mounting position, and number of the baffle 110 are arbitrary, in the present embodiment, the baffle 110 is provided on an inner wall surface of the crystallization vessel 90 (side wall 90b), and more specifically, is a plate-like member extending in the Z direction on the inner wall surface of the side wall 90b.

In the present embodiment, a plurality of baffles 110 are provided on the inner wall surface of the side wall 90b in a circumferential direction in a case where a central axis of the crystallization vessel 90 along the Z direction is set to an axial direction. In the present embodiment, each baffle 110 is provided so as to be arranged at equal intervals in the circumferential direction when viewed from the Z direction. For example, as illustrated in FIG. 5, when there are three baffles 110, the three baffles 110 are provided at intervals of 120°. Further, as illustrated in FIG. 6, when there are two baffles 110, the two baffles 110 are provided facing each other, in other words, at intervals of 180°. Further, when a plurality of baffles 110 are provided, the opening portion 90c is provided at a central position of the two baffles 110 adjacent to each other in the circumferential direction. In other words, for example, in the example of FIG. 7, since the baffles 110 are adjacent to each other at intervals of 180°, the opening portion 90c is provided at a position adjacent to each baffle 110 at intervals of 90°.

However, the baffle 110 is not an essential component, and does not necessarily have to be provided in the crystallization vessel 90.

### (Stirring section)

The stirring section 100 is a device that is provided in the crystallization vessel 90 and stirs the inside of the crystallization vessel 90. The stirring section 100 includes a rotation shaft 104 and a stirring blade 106.

The rotation shaft 104 is a shaft-shaped member rotatably inserted into the crystallization vessel 90. The stirring blade 106 is a blade provided at a front end of the rotation shaft 104 on the side of the Z2 direction. The stirring blade 106 may have, for example, a shape in which a plurality of blades are arranged in the circumferential direction. The stirring blade 106 is located inside the crystallization vessel 90 on the side of the Z2 direction relative to the opening portion 90c. Further, in the present embodiment, the stirring blade 106 is located on the side of the Z2 direction relative to the adjustment section 86. Further, the stirring blade 106 is located on the side of the Z1 direction relative to the bottom surface portion 90a2 of the crystallization vessel 90, and is provided at a position facing the bottom surface portion 90a2 (that is, a position overlapping the bottom surface portion 90a2 as viewed from the Z direction). Further, the stirring section 100 is preferably provided at a central position of the crystallization vessel 90 when viewed from the Z direction. In other words, it is preferable that the central axis of the stirring section 100 and the central axis of the crystallization vessel 90 coincide with each other.

The stirring section 100 rotates when a drive section 102 (for example, a motor) is driven, stirring the inside of the crystallization vessel 90. Here, the stirring section 100 is configured to rotate to generate a downward flow Df in the crystallization vessel 90. The downward flow Df refers to a water flow directed in the Z2 direction from the front end of the stirring blade 106. For example, the stirring section 100 is set such that a rotation direction thereof and an orientation of the blade of the stirring blade 106 can generate a downward flow Df. Therefore, when the stirring section 100 is rotated in the crystallization vessel 90 in which the dissolution liquid L reduced in pressure is stored, as illustrated in FIG. 3, the dissolution liquid L flows from the front end of the stirring blade 106 toward the Z2 direction along the downward flow Df and reaches the bottom surface portion 90a2. The dissolution liquid L that has reached the bottom surface portion 90a2 flows radially outward along the bottom surface portion 90a2 and flows toward the Z1 direction along the side wall 90b as an upward flow Uf. In other words, in the present embodiment, the dissolution liquid L in the crystallization vessel 90 flows in the Z2 direction following the downward flow Df in a region on the side of the Z2 direction of the stirring blade 106, and flows in the Z1 direction following the upward flow Uf in a region on the side of the Z1 direction of the stirring blade 106 near the side wall 90b.

### (Crystallization of monomer HD)

The crystallization system 80 crystallizes the monomer HD from the dissolution liquid L in the crystallization vessel 90 with the above configuration. In other words, when the dissolution liquid L in the dissolution vessel 82 is supplied to the adjustment section 86 through the introduction pipe 84, the dissolution liquid L is reduced in pressure by the adjustment section 86. The dissolution liquid L reduced in pressure by the adjustment section 86 is introduced into the crystallization vessel 90 through the opening portion 90c. Since the temperature of the dissolution liquid L reduced in pressure decreases, the monomer HD is crystallized in the crystallization vessel 90 and stored as the slurry S. Further, since the inside of the crystallization vessel 90 is stirred by the stirring section 100, the crystallization of the monomer HD in the crystallization vessel 90 is promoted.

Here, since the dissolution liquid L is reduced in pressure immediately after passing through the adjustment section 86, the monomer HD may be crystallized at the opening portion 90c, which is an inlet through which the dissolution liquid is introduced into the crystallization vessel 90. In this case, the monomer HD as a solid component may be deposited at the opening portion 90c, potentially blocking at least a part of the opening portion 90c. This may prevent the dissolution liquid L from being appropriately introduced into the crystallization vessel 90, making it impossible to appropriately obtain the monomer HD, which is the object to be separated.

On the other hand, in the present embodiment, the stirring section 100 is configured to generate the downward flow Df, and the stirring blade 106 is disposed on the side of the Z2 direction relative to the opening portion 90c. As a result, the upward flow Uf can be generated in the region where the opening portion 90c is formed, and the monomer HD deposited in the opening portion 90c or flowing through the opening portion 90c can be introduced into the crystallization vessel 90 by the upward flow Uf, thereby suppressing blockage of the opening portion 90c. More specifically, since the monomer HD is deposited on an edge of the opening portion 90c on the side of the Z2 direction, the monomer HD deposited at the opening portion 90c can be stirred up and appropriately removed by the upward flow Uf toward the Z1 direction. Further, in the present embodiment, since the adjustment section 86 is directly connected to the opening portion 90c, the flow path from the adjustment section 86 to the crystallization vessel 90 can be shortened, and blockage due to the monomer HD can be more appropriately suppressed. Furthermore, in the present embodiment, since the baffle 110 is provided inside the crystallization vessel 90, the upward flow Uf can be straightened to more appropriately remove the monomer HD.

Further, when a pressure loss of the dissolution liquid L increases due to head pressure in the introduction pipe 84 connecting the dissolution vessel 82 and the crystallization vessel 90, bubbles may be generated from the dissolution liquid L due to the reduced pressure. When bubbles are generated, vapor lock may occur in the adjustment section 86, preventing the dissolution liquid L from being appropriately introduced into the crystallization vessel 90, and potentially preventing appropriate crystallization of the monomer HD. On the other hand, in the present embodiment, the dissolution vessel 82 is disposed on the side of the Z1 direction relative to the crystallization vessel 90. This suppresses the pressure loss of the dissolution liquid L due to head pressure, suppresses the occurrence of vapor lock due to bubbles, and makes it possible to appropriately crystallize the monomer HD.

### (Preparation of PTA)

Next, a method for preparing PTA from the monomer HD by the crystallization system 80 will be described. The crystallization system 80 prepares PTA by the solid-liquid separation section 120, the melting vessel 130, the molten product temporary storage tank 140, and the hydrolysis separation reaction section 150.

The solid-liquid separation section 120 is connected to the crystallization vessel 90 via the discharge pipe 121. The slurry S (the dissolution liquid L in which the monomer HD has crystallized) produced in the crystallization vessel 90 is introduced into the solid-liquid separation section 120 from the crystallization vessel 90 through the discharge pipe 121. The solid-liquid separation section 120 performs solid-liquid separation on the introduced slurry S. The solid-liquid separation section 120 separates the slurry S into an object to be separated which is a solid component, and a liquid component. In the present embodiment, the solid-liquid separation section 120 separates the slurry S into the monomer HD and the dissolution liquid L from which the monomer HD has been removed. The dissolution liquid L from which the monomer HD has been removed is discharged from a discharge pipe 123 connected to the solid-liquid separation section 120 and processed. The solid-liquid separation section 120 is, for example, a centrifugal separator, and may separate the object to be separated from the dissolution liquid L by centrifugal separation in which the inside of the solid-liquid separation section 120 is stirred around a predetermined axis and the object to be separated is moved radially outward of the rotation axis. The solid-liquid separation section 120 is not limited to centrifugal separation as long as the object to be separated can be separated from the dissolution liquid L. For example, the solid-liquid separation section 120 may separate the object to be separated from the dissolution liquid L by a filter.

The high-purity monomer HD obtained by solid-liquid separation from the slurry S is introduced into the melting vessel 130 from a discharge pipe 122 connected to the solid-liquid separation section 120. The melting vessel 130 is a vessel that heats and melts the introduced monomer HD. The monomer HD melted in the melting vessel 130 is introduced into the molten product temporary storage tank 140, temporarily stored, and then introduced from the molten product temporary storage tank 140 into the hydrolysis separation reaction section 150. The hydrolysis separation reaction section 150 is a vessel in which water is added to the introduced monomer HD to hydrolyze the monomer HD. The hydrolysis separation reaction section 150 prepares PTA by hydrolyzing the monomer HD. Thereafter, although not illustrated, the PTA is stored in a hopper after undergoing a crystallization process and a drying process.

### (Control section)

The control section 30 is a control device that controls the separation system 1. The control section 30 controls the adjustment section 10b to control the amount of the polyester raw material Pm supplied from the raw material storage section 10 to the dissolution section 12. Further, in a case where the solid-liquid separation section 13 includes a drive section, the control section 30 controls operation of the solid-liquid separation section 13. The control section 30 controls the supply section 12a1 to control the amount of the dissolution liquid Pd supplied from the dissolution section 12 to the reaction section 16. The control section 30 controls the heating and pressurizing section 14b to set the reaction solvent M to a supercritical state or a subcritical state (pressurized gas or pressurized liquid), and controls the amount of the reaction solvent M in the supercritical state or the subcritical state (pressurized gas or pressurized liquid) supplied to the reaction section 16. The control section 30 controls the adjustment section 18Ce to control the amount of the monomer D supplied to the dissolution section 12. The control section 30 controls the adjustment section 18Cg to control the amount of the residual substance R supplied to the dissolution section 12. The control section 30 adjusts the adjustment section 86 to control the flow rate of the dissolution liquid L into the crystallization vessel 90 while reducing the pressure of the dissolution liquid L. The control section 30 controls the drive section 102 to control the rotation of the stirring section 100.

In the present embodiment, the control section 30 is a computer, and includes, for example, a processor including an arithmetic circuit such as a Central Processing Unit (CPU) and a storage unit that stores various types of information such as arithmetic contents by the processor and programs. The control section 30 executes control of the separation system 1 by reading programs from the storage unit.

However, the separation system 1 is not limited to being automatically controlled by the control section 30, and for example, at least a part of the processing may be controlled by an operation of a worker.

### (Operation of separation system)

Next, the operation of the separation system 1 will be described. The control section 30 controls the adjustment sections 10b and 18Ce to introduce the polyester raw material Pm and the monomer D into the dissolution section 12, and mixes the polyester raw material Pm and the monomer D in the dissolution section 12 to produce the dissolution liquid Pd. The control section 30 controls the supply section 12a1 to introduce the dissolution liquid Pd produced in the dissolution section 12 into the first reaction section 16A.

The control section 30 controls the heating and pressurizing section 14b to supply the reaction solvent M in a supercritical state or a subcritical state (pressurized gas or pressurized liquid) to the reaction section 16. The control section 30 preferably sets the reaction solvent M to 250°C or higher and 400°C or lower, and more preferably to 250°C or higher and 350°C or lower. The control section 30 preferably sets the reaction solvent M to 1 MPa or more and 30 MPa or less, and more preferably to 6 MPa or more and 25 MPa or less.

As described above, when the dissolution liquid Pd and the reaction solvent M are supplied to the reaction section 16, the polyester contained in the dissolution liquid Pd is depolymerized in the first reaction section 16A to produce the first depolymerized polyester P1. Then, in the second reaction section 16B, the first depolymerized polyester P1 is further depolymerized to produce a second solvent M2, which is a mixture of the second depolymerized polyester P2 and the reaction solvent M. The second solvent M2 is separated into the reaction solvent M, the monomer D, the monomer E, and the residual substance in the first separation section 18A, the second separation section 18B, and the third separation section 18C.

The control section 30 supplies the dissolution liquid L to the adjustment section 86 by controlling the adjustment section 86, causes the adjustment section 86 to reduce the pressure of the dissolution liquid L, and causes the dissolution liquid L reduced in pressure to be introduced into the crystallization vessel 90 from the opening portion 90c. Since the dissolution liquid L introduced into the crystallization vessel 90 is reduced in pressure, the monomer HD which is the object to be separated from the dissolution liquid L is crystallized in the crystallization vessel 90. Further, the control section 30 controls the rotation of the stirring section 100. As a result, the inside of the crystallization vessel 90 is stirred, generating the downward flow Df of the dissolution liquid L in the crystallization vessel 90. As a result, the upward flow Uf is generated near the opening portion 90c, which can suppress deposition of the monomer HD at the opening portion 90c.

### (Effects of the present disclosure)

A crystallization system according to a first aspect of the present disclosure includes: an adjustment section 86 that reduces the pressure of a dissolution liquid L in which an object to be separated has been dissolved; a crystallization vessel 90 in which an opening portion 90c connected to the adjustment section 86 is formed, the dissolution liquid L reduced in pressure by the adjustment section 86 is introduced through the opening portion 90c, and the object to be separated is crystallized from the dissolution liquid L inside; and a stirring section 100 that is provided in the crystallization vessel 90 and stirs the inside of the crystallization vessel 90 to generate a downward flow Df of the dissolution liquid L, in which a stirring blade 106 of the stirring section 100 that stirs the dissolution liquid L is located vertically below the opening portion 90c.

For this reason, an upward flow can be generated by the stirring blade. The upward flow removes monomer crystals deposited at the opening portion by stirring them up. Therefore, the object to be separated can be appropriately crystallized.

A crystallization system according to a second aspect of the present disclosure is the crystallization system according to the first aspect, in which the adjustment section 86 is directly connected to the opening portion 90c. Therefore, the flow path between the adjustment section and the crystallization vessel can be shortened, and blockage of the opening portion due to the monomer can be suppressed.

A crystallization system according to a third aspect of the present disclosure is the crystallization system according to the first aspect or the second aspect, further including a baffle 110 that is provided inside the crystallization vessel 90 and straightens the flow of the dissolution liquid L in the crystallization vessel 90. As a result, the flow of the dissolution liquid can be assisted, and the object to be separated can be appropriately crystallized.

A crystallization system according to a fourth aspect of the present disclosure is the crystallization system according to the third aspect, in which the baffle 110 is a plate member extending in the vertical direction on an inner wall surface of the crystallization vessel 90. As a result, the flow of the dissolution liquid can be assisted, and the object to be separated can be appropriately crystallized.

A crystallization system according to a fifth aspect of the present disclosure is the crystallization system according to any one of the first to fourth aspects, in which the adjustment section 86 is an angle valve. As a result, the dissolution liquid is reduced in pressure by the valve itself and is reduced in pressure by flowing through the flow path of the angle, allowing efficient pressure reduction.

A crystallization system according to a sixth aspect of the present disclosure is the crystallization system according to any one of the first to fifth aspects, further including: a dissolution vessel 82 in which the dissolution liquid L is stored; and an introduction pipe 84 that connects the dissolution vessel 82 and the opening portion 90c, in which the dissolution vessel 82 is located vertically above the crystallization vessel 90. As a result, the dissolution liquid L flows from the dissolution vessel to the crystallization vessel without resisting gravity. Therefore, it is possible to suppress an increase in pressure loss due to head pressure. Further, vapor lock due to bubbles generated in the adjustment section can be eliminated, leading to appropriate crystallization of the object to be separated.

A crystallization system according to a seventh aspect of the present disclosure is the crystallization system according to any one of the first to sixth aspects, in which the object to be separated is dimethyl terephthalate, and therefore dimethyl terephthalate (DMT) can be crystallized.

A crystallization method according to an eighth aspect of the present disclosure is a crystallization method of a crystallization system including an adjustment section 86 that reduces the pressure of a liquid, a crystallization vessel 90 in which an opening portion 90c connected to the adjustment section 86 is formed, and a stirring section 100 that is provided in the crystallization vessel 90 and in which a stirring blade 106 that stirs the liquid is located vertically below the opening portion 90c, the crystallization method including: a step of supplying a dissolution liquid L in which an object to be separated has been dissolved to the adjustment section 86, thereby reducing the pressure of the dissolution liquid L by the adjustment section 86 and introducing the dissolution liquid L through the opening portion 90c into the crystallization vessel 90, and crystallizing the object to be separated from the dissolution liquid L in the crystallization vessel 90; and a step of rotating the stirring section 100 in a state where the dissolution liquid L reduced in pressure is introduced into the crystallization vessel 90, thereby stirring the inside of the crystallization vessel 90 to generate a downward flow Df of the dissolution liquid L.

For this reason, an upward flow can be generated by the stirring blade. The upward flow removes monomer crystals deposited at the opening portion by stirring them up. Therefore, the object to be separated can be appropriately crystallized.

Although the embodiment of the present invention has been described above, embodiments are not limited to the content of the embodiment. Further, the above-described components include those that can be easily conceived by those skilled in the art, those that are substantially the same, and those in a so-called equivalent range. Furthermore, the above-described components can be appropriately combined. Furthermore, various omissions, substitutions, or modifications of the components can be made without departing from the gist of the above-described embodiment.

### Reference Signs List

- 1: SEPARATION SYSTEM
- 12: DISSOLUTION SECTION
- 13: SOLID-LIQUID SEPARATION SECTION
- 14: SOLVENT STORAGE SECTION
- 16: REACTION SECTION
- 18: SEPARATION SECTION
- 30: CONTROL SECTION
- 80: CRYSTALLIZATION SYSTEM
- 82: DISSOLUTION VESSEL
- 86: ADJUSTMENT SECTION
- 90: CRYSTALLIZATION VESSEL
- 100: STIRRING SECTION
- 110: BAFFLE
- D, HD, E: MONOMER
- M: REACTION SOLVENT
- P: POLYESTER SOLUTION
- Pd, L: DISSOLUTION LIQUID
- Pm: POLYESTER RAW MATERIAL
- R: RESIDUAL SUBSTANCE

## Claims

1. A crystallization system comprising:
an adjustment section that reduces a pressure of a dissolution liquid in which an object to be separated has been dissolved;
a crystallization vessel in which an opening portion connected to the adjustment section is formed, a dissolution liquid reduced in pressure by the adjustment section is introduced through the opening portion, and the object to be separated is crystallized from the dissolution liquid inside; and
a stirring section that is provided in the crystallization vessel and stirs the inside of the crystallization vessel to generate a downward flow of the dissolution liquid, wherein
a stirring blade of the stirring section that stirs the dissolution liquid is located vertically below the opening portion.

2. The crystallization system according to claim 1, wherein the adjustment section is directly connected to the opening portion.

3. The crystallization system according to claim 1 or 2, further comprising a baffle that is provided inside the crystallization vessel and straightens a flow of the dissolution liquid in the crystallization vessel.

4. The crystallization system according to claim 3, wherein the baffle is a plate member extending in a vertical direction on an inner wall surface of the crystallization vessel.

5. The crystallization system according to claim 1 or 2, wherein the adjustment section is an angle valve.

6. The crystallization system according to claim 1 or 2, further comprising:
a dissolution vessel in which the dissolution liquid is stored; and
an introduction pipe that connects the dissolution vessel and the opening portion, wherein
the dissolution vessel is located vertically above the crystallization vessel.

7. The crystallization system according to claim 1 or 2, wherein the object to be separated is dimethyl terephthalate.

8. A crystallization method of a crystallization system that includes an adjustment
section that reduces a pressure of a liquid,
a crystallization vessel in which an opening portion connected to the adjustment section is formed, and
a stirring section that is provided in the crystallization vessel and in which a stirring blade that stirs the liquid is located vertically below the opening portion,
the crystallization method comprising the steps of:
supplying a dissolution liquid in which an object to be separated has been dissolved to the adjustment section, thereby reducing a pressure of the dissolution liquid by the adjustment section and introducing the dissolution liquid through the opening portion into the crystallization vessel, and crystallizing the object to be separated from the dissolution liquid in the crystallization vessel; and
rotating the stirring section in a state where the dissolution liquid reduced in pressure is introduced into the crystallization vessel, thereby stirring the inside of the crystallization vessel to generate a downward flow of the dissolution liquid.
